# FASCICULE DE BREVET EUROPEEN

(11) **EP 2 335 533 B1**
(45) Date de publication et mention de la délivrance du brevet: **03.04.2013**
(21) Numéro de dépôt: 10306421.8
(22) Date de dépôt: 15.12.2010
(51) Int. Cl.: A47J 43/07, A47J 43/044

(54) **Appareil électroménager de préparation culinaire prévu pour être tenu à la main muni d'un dispositif de commande particulier**
Haushaltsgerät zur Essenszubereitung, das zum Halten in der Hand konzipiert und mit einer speziellen Steuervorrichtung ausgestattet ist
Household cooking appliance designed to be held in the hand provided with a specific control device

(30) Priorité: 18.12.2009 FR 0906144
(43) Date de publication de la demande: 22.06.2011
(73) Titulaire: SEB S.A., 69130 Ecully (FR)
(72) Inventeur: Balan, Lionel, 50000, SAINT-LO (FR); Lecerf, Joël, 50190, PERIERS (FR)
(74) Mandataire: Bourrières, Patrice

(56) Documents cités:
- WO-A1-2007/020161
- FR-A1- 2 758 073

## Description

La présente invention concerne le domaine technique général des appareils électroménagers de préparation culinaire tenus à la main, tel qu'un mixeur plongeant, comportant un boitier renfermant un moteur électrique dont la mise sous tension est commandée par un dispositif de commande.

Les normes de sécurité imposent, pour ce type d'appareils, qu'il ne soit pas possible de faire fonctionner l'appareil en appliquant sur le dispositif de commande du moteur un doigt d'épreuve constitué par une sphère de diamètre prédéterminé, égal à 40 millimètres dans le cas de la norme internationale IEC 60 335-2-14 (édition 5.1 Sept-2008). Une telle norme de sécurité a notamment pour but d'éviter un démarrage involontaire de l'appareil, avec les risques de blessure que cela comporte, par exemple lorsque l'appareil est posé sur un plan de travail.

Il est connu, du document FR 2 758 073, un mixeur plongeant comportant un boitier renfermant un moteur électrique commandé par un bouton poussoir, disposé en retrait par rapport à un rebord périphérique du boitier, sur lequel la sphère de 40 mm est susceptible de prendre appui sans pouvoir actionner le bouton poussoir. Un tel bouton de commande du moteur permet de respecter la norme en vigueur en ayant un bouton poussoir de faible débattement.

Cependant, un tel appareil nécessite l'actionnement permanent du bouton poussoir pour fonctionner et présente donc l'inconvénient d'engendrer une crispation du doigt utilisé pour actionner le bouton poussoir. Un tel actionnement du bouton poussoir au moyen d'un seul doigt peut donc devenir fatigant et engendrer des douleurs chez certaines personnes.

Aussi, l'invention qui suit vise à pallier ces inconvénients en proposant un appareil électroménager de préparation culinaire prévu pour être tenu à la main capable de respecter les normes de sécurité en vigueur et dont le dispositif de commande pour la mise sous tension du moteur permette un usage aisé et peu fatigant de l'appareil.

Le but de l'invention est atteint par un appareil électroménager de préparation culinaire prévu pour être tenu à la main comprenant un boitier renfermant un moteur électrique dont la mise sous tension est commandée par un dispositif de commande, **caractérisé en ce que** le dispositif de commande comporte une manette ramenée par des moyens de rappel vers une position de repos et pouvant être actionnée manuellement vers une position de fonctionnement, et en ce que le dispositif de commande comporte un bouton de sécurité devant être actionné en même temps que la manette afin que le seul maintien de la manette en position de fonctionnement permette le fonctionnement continu du moteur jusqu'au relâchement de la manette.

Une telle caractéristique présente l'avantage de permettre à l'utilisateur de commander le fonctionnement du moteur au moyen d'une manette pouvant être saisie par plusieurs doigts, et notamment à pleine main, ce qui procure un grand confort d'utilisation et réduit fortement les problèmes de crispation. De plus, la sécurité d'un tel appareil est garantie par le fait que le dispositif de commande autorise le fonctionnement du moteur par le seul actionnement de la manette uniquement lorsque l'utilisateur a, au préalable, actionné le bouton de sécurité simultanément à l'actionnement de la manette.

Selon d'autres modes particuliers de réalisation, le boitier d'appareil électroménager selon l'invention peut comprendre l'une ou plusieurs des combinaisons prises isolément ou selon toutes les combinaisons techniquement possibles :
- le moteur est mis hors tension lorsque ni la manette, ni le bouton de sécurité ne sont actionnés;
- le moteur est commandé par un organe de commande mobile entre une position de repos et une position de fonctionnement, l'organe de commande étant immobilisé dans la position de repos par des moyens de verrouillage, le bouton de sécurité coopérant avec un bouton de déverrouillage porté par le boitier pour déplacer le bouton de déverrouillage vers une position de fonctionnement dans laquelle les moyens de verrouillage sont désactivés, le bouton de déverrouillage étant ramené par un ressort dans une position de verrouillage dans laquelle l'organe de commande est immobilisé en position de repos par les moyens de verrouillage.

- le boitier comporte des moyens de blocage interdisant le déplacement de la manette vers la position de fonctionnement lorsque le bouton de sécurité n'est pas actionné, les moyens de blocage s'activant automatiquement lorsque la manette est en position repos ;
- les moyens de blocage comportent un coulisseau mobile en translation derrière une ouverture du boitier, le coulisseau étant ramené par des moyens de rappel dans une position de repos dans laquelle le coulisseau est bloqué en translation par un loquet de verrouillage, le bouton de sécurité comportant une tige d'actionnement venant chasser le loquet de verrouillage hors de l'empreinte lorsque le bouton de sécurité est actionné, le coulisseau comporte une rampe coopérant avec un doigt d'actionnement porté par la manette de manière à ce que l'enfoncement de la manette vers la position de fonctionnement génère une force tendant à déplacer en translation le coulisseau vers une position de fonctionnement dans laquelle une came portée par le coulisseau vient actionner un interrupteur de commande du moteur;
- l'organe de commande est monté pivotant sur un levier de manière à pouvoir basculer de la position de repos à la position de fonctionnement, ce dernier étant lui-même monté pivotant sur un bâti;
- la manette s'étend longitudinalement sur sensiblement toute la longueur du boitier;
- la manette comporte une extrémité fixée sur le boitier et une extrémité libre;
- la manette est fixée rigidement au boitier à l'une de ses extrémités et est flexible de manière à permettre le déplacement de l'extrémité libre de la manette de la position de repos à la position de fonctionnement par déformation de ladite manette, les moyens de rappel de la manette en position de repos étant constitués par l'élasticité de la manette ;
- la manette est fixée de manière amovible sur le boitier de sorte qu'elle peut être facilement démontée du boitier sans avoir recours à un outillage particulier ;
- le bouton de sécurité est porté par ladite manette;
- le bouton de sécurité est disposé à proximité de l'extrémité libre de la manette ;
- le bouton de sécurité est tel qu'il ne puisse pas être actionné par une sphère de diamètre 40 mm ;
- le boitier comporte une extrémité pouvant être accouplée avec un pied de mixage.

On comprendra mieux les buts, aspects et avantages de la présente invention, d'après la description donnée ci-après de plusieurs modes particuliers de réalisation de l'invention présentés à titre d'exemples non limitatifs, en se référant aux dessins annexés dans lesquels :
- la figure 1 est une vue en perspective d'un boitier moteur d'appareil électroménager selon un premier mode de réalisation de l'invention;
- la figure 2 est une vue de face de l'appareil de la figure 1 ;
- la figure 3 est une vue en coupe selon la ligne III-III de la figure 2 ;
- la figure 4 est une vue en perspective, partiellement arrachée, du boitier moteur de la figure 1 ;
- la figure 5 est une vue en perspective d'une partie des composants constituant le dispositif de commande du moteur ;
- la figure 6 est une vue en perspective du coulisseau de sécurité et du bouton de déverrouillage du dispositif de commande du boitier moteur;
- les figures 7 et 8 sont des vues en coupe selon la ligne III-III de la figure 2 lorsque la manette de commande est respectivement dans une position intermédiaire avec le bouton de sécurité enfoncé et une position de fonctionnement avec le bouton de sécurité relâché;
- les figures 9 et 10 sont respectivement des vues en coupe selon les lignes IX-IX et X-X des figures 3 et 8 ;
- la figure 11 est une vue de côté du boitier moteur de la figure 1 accouplé à un pied mixeur, la manette du boitier étant saisie à pleine main;
- les figures 12 et 13 sont des vues en perspective d'un deuxième mode de réalisation de l'appareil selon l'invention, le bouton de sécurité du dispositif de commande du moteur étant représenté respectivement dans une position de repos et dans une position actionnée permettant la mise en marche du moteur;
- La figure 14 est une vue en coupe longitudinale d'un appareil selon un troisième de mode de réalisation de l'invention, la manette de commande étant représentée en position relâchée;
- Les figures 15 et 16 sont des vues en perspective éclatée du module de commande intégré dans le boitier de l'appareil de la figure 14;
- La figure 17 est une vue en perspective du module de commande intégré dans le boitier de l'appareil de la figure 14;
- La figure 18 est une vue de dessus du module de commande de la figure 17;
- La figure 19 est une vue en coupe du module de commande selon la ligne XIX-XIX de la figure 18, lorsque les boutons de commande et de déverrouillage sont en position de repos ;
- Les figures 20 et 21 sont respectivement des vues en coupe du module de commande selon les lignes XIX-XIX et XXI-XXI de la figure 18 lorsque le bouton de commande est enfoncé sans avoir pressé sur le bouton de déverrouillage;
- La figure 22 est une vue en perspective du module de commande des figures 20 et 21;
- La figure 23 est une vue en coupe longitudinale de l'appareil de la figure 14 lorsque la manette et le bouton de déverrouillage sont enfoncés.
- Les figures 24 à 26 sont respectivement des vues en perspective, en coupe selon la ligne XIX-XIX et en coupe selon la ligne XXI-XXI de la figure 18, lorsque le bouton de commande et le bouton de déverrouillage sont enfoncés.

Seuls les éléments nécessaires à la compréhension de l'invention ont été représentés. Pour faciliter la lecture des dessins, les mêmes éléments portent les mêmes références d'une figure à l'autre.

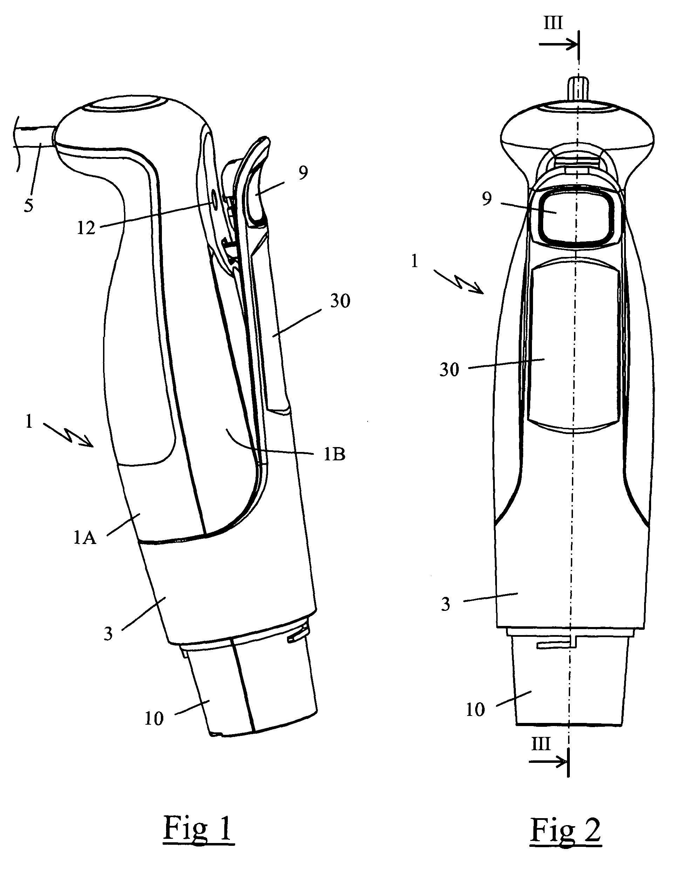

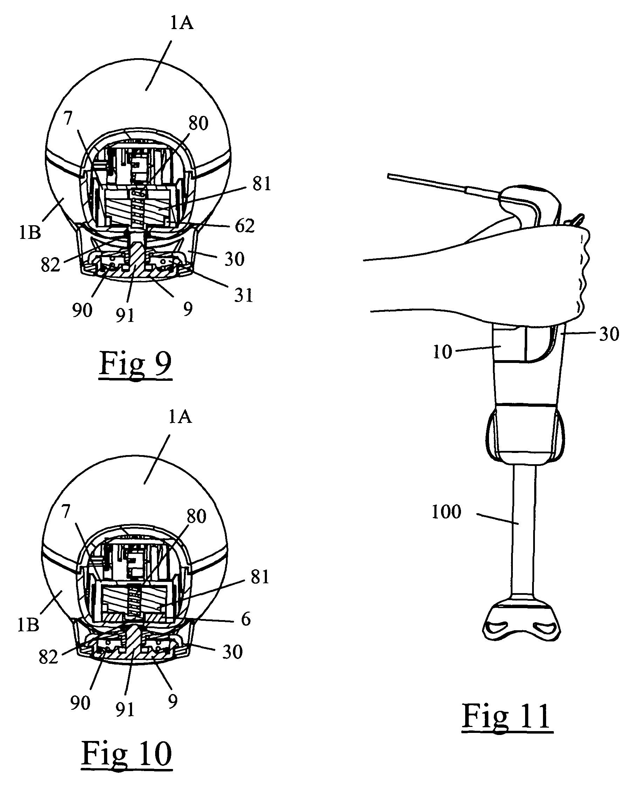

La figure 1 représente une vue en perspective d'un boitier 1 de mixeur plongeant comportant un corps de forme allongée constitué essentiellement par deux coquilles 1A et 1 B assemblées l'une sur l'autre, le boitier 1 comprenant une extrémité inférieure munie d'un manchon d'accouplement 10 destinée à être accouplée à un accessoire 100, tel un pied de mixage illustré seulement sur la figure 11.

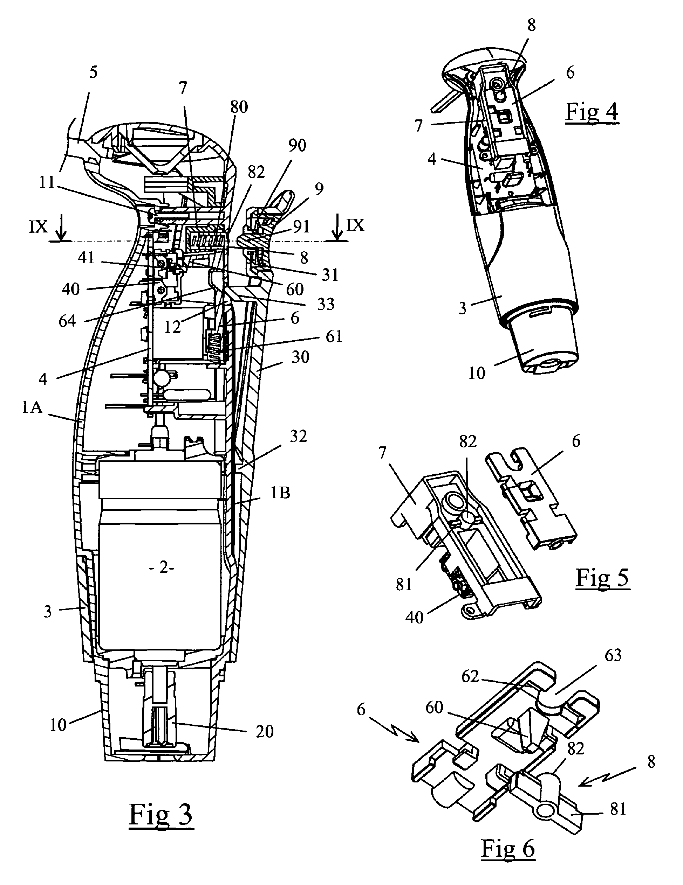

Conformément à la figure 3, le boitier 1 renferme, de manière connue en soi, un moteur électrique 2 dont l'arbre de sortie est relié à un entraineur 20 permettant l'entraînement rotatif d'un outil de travail de l'accessoire 100 lorsque ce dernier est accouplé au boîtier.

De manière avantageuse, les deux coquilles 1A, 1 B sont clipsées l'une sur l'autre à leur extrémité inférieure et sont fixées au moyen d'une vis 11 à leur extrémité supérieure, l'extrémité inférieure du boitier 1 recevant une bague 3 amovible avantageusement maintenue par clipsage sur le boitier 1. La bague 3 est emmanchée sur l'extrémité inférieure du boitier 1 et se prolonge par une manette 30 s'étendant le long du boitier 1, la manette 30 comportant une extrémité libre maintenue écartée du boitier 1 d'une distance de l'ordre de 5 mm au moyen d'un pion 32 disposé à proximité de la bague 3, cette position de la manette 30 correspondant à une position de repos.

Le pion 32 forme ainsi un point d'appui sur le boitier 1 autour duquel l'extrémité libre de la manette 30 peut pivoter lorsqu'une pression manuelle est exercée sur la manette 30 dans une zone de préhension située au dessus du pion 32, le pivotement de l'extrémité libre s'effectuant par déformation élastique de la manette 30 de sorte que la manette 30 est ramenée automatiquement dans sa position de repos lorsqu'elle est relâchée.

Le moteur 2 est relié électriquement à un circuit d'alimentation comprenant un circuit imprimé 4 comportant un interrupteur 40 permettant de mettre sous tension le moteur 2, le circuit d'alimentation du moteur 2 étant relié au réseau électrique au moyen d'un cordon d'alimentation 5 pénétrant dans le boitier 1 pour une alimentation en 220V alternatif.

Plus particulièrement selon le premier mode de réalisation de l'invention, l'appareil comporte un dispositif de commande de l'interrupteur 40 comprenant un coulisseau 6 supportant une came 60 susceptible d'actionner un contacteur 41 de l'interrupteur 40, le coulisseau 6 étant ramené par un ressort 61 dans une position de repos, illustrée à la figure 3, dans laquelle la came 60 se trouve décalée par rapport au contacteur 41 de sorte que l'interrupteur 40 est ouvert et le moteur 2 se trouve hors tension.

Conformément aux figures 4 à 6, le coulisseau 6 est monté mobile sur un bâti 7 de manière à pouvoir être déplacé à l'encontre du ressort 61, le coulisseau 6 étant verrouillé dans la position de repos par deux loquets de verrouillage 81 portés par un bouton de déverrouillage 8 se déplaçant perpendiculairement au coulisseau 6.

De manière préférentielle, le bouton de déverrouillage 8 comporte un corps cylindrique coulissant dans un logement du bâti 7 à l'encontre d'un ressort de rappel 80 de sorte que les extrémités supérieures des deux loquets de verrouillage 81 viennent s'engager, sous l'effet du ressort de rappel 80, dans des empreintes 62 de forme complémentaire du coulisseau 6 pour immobiliser en translation le coulisseau 6 dans la position de repos, comme cela est illustré sur la figure 9.

Le corps cylindrique du bouton de déverrouillage 8 se prolonge au delà des loquets de verrouillage 81 par une tête 82 qui s'engage dans une échancrure 63 formée à l'extrémité du coulisseau 6 et pénètre dans une ouverture 12 du boitier 1 pour être affleurant avec ce dernier lorsque le coulisseau 6 est immobilisé en position de repos, ainsi que cela est illustré sur la figure 3.

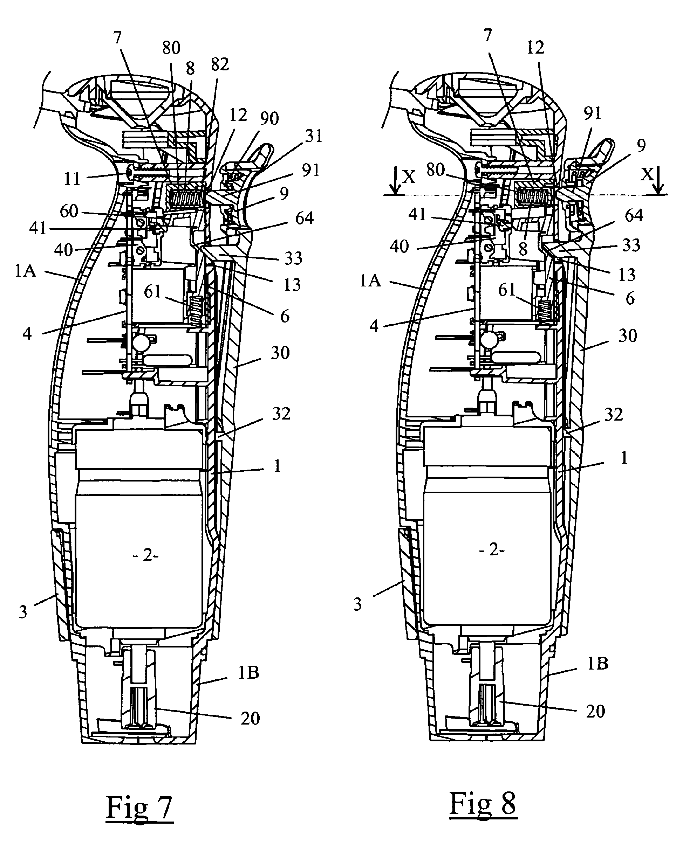

En face de l'ouverture 12, la manette 30 supporte un bouton de sécurité 9 monté coulissant dans un logement 31 disposé à proximité de l'extrémité libre de la manette 30, le bouton de sécurité 9 étant ramené dans une position de repos par un ressort de rappel 90. Le bouton de sécurité 9 comporte une tige d'actionnement 91 s'étendant en regard de la tête 82 du bouton de déverrouillage 8 de sorte qu'une pression manuelle sur le bouton de sécurité 9 en direction du boitier 1 permet d'exercer une poussée sur la tête 82 du bouton de déverrouillage 8. De cette façon, lorsque le bouton de sécurité 9 est enfoncé, le bouton de déverrouillage 8 se trouve déplacé à l'encontre du ressort 80 (ainsi que cela est illustré sur la figure 7) et les loquets de verrouillage 81 se trouvent en dehors des empreintes 62 du coulisseau 6.

De manière préférentielle, les formes du bouton de sécurité 9 et du logement 31 sont telles qu'une sphère de 40 mm en appui sur le bouton de sécurité 9 ne puisse pas provoquer l'enfoncement du bouton de sécurité 9 dans son logement 31. A titre d'exemple, le bouton de sécurité 9 présente une surface incurvée et le logement 31 présente une section transversale d'une largeur de l'ordre de 25 mm et d'une hauteur de l'ordre de 20 mm.

Conformément à la figure 7, la manette 30 comporte, en dessous du bouton de sécurité 9, un doigt d'actionnement 33 qui fait saillie en direction du boitier 1, le doigt d'actionnement 33 comportant une extrémité biseautée venant s'engager dans un orifice 13 de la coquille 1 B pour coopérer avec une rampe 64 portée par le coulisseau 6 lorsqu'une pression est exercée sur la manette 30 par l'utilisateur. La pression exercée par le doigt d'actionnement 33 sur la rampe 64 génère une force latérale qui tend à translater le coulisseau 6 vers une position de fonctionnement, illustrée à la figure 8, dans laquelle la came 60 du coulisseau actionne le contacteur 41 de l'interrupteur 40 pour mettre sous tension le moteur 2, les loquets de verrouillage 81 du bouton de déverrouillage 8 se trouvant alors en appui contre la face inférieure du coulisseau 6 s'étendant de part et d'autre de l'encoche 62, ainsi que cela est illustré sur la figure 10.

Bien entendu, ce déplacement du coulisseau 6 vers la position de fonctionnement du moteur n'est possible que si le coulisseau 6 a été déverrouillé simultanément à l'actionnement de la manette 30, en appuyant sur le bouton de sécurité 9. Lorsque le coulisseau 6 est en position de fonctionnement, le bouton de sécurité 9 peut être relâché sans que ceci ne provoque l'arrêt du moteur 2.

Lorsque l'utilisateur relâche la manette 30, cette dernière est ramenée automatiquement dans sa position de repos de sorte que le doigt d'actionnement 33 libère le coulisseau 6 qui est alors ramené automatiquement par son ressort de rappel 61 dans la position de repos dans laquelle la came 60 se trouve décalée par rapport au contacteur 41 ce qui provoque l'arrêt du moteur 2.

On obtient ainsi un boitier 1 pouvant être utilisé avec un pied mixeur, tel que cela est illustré sur la figure 11, présentant une grande ergonomie d'utilisation et respectant les normes de sécurité.

En effet, l'utilisateur peut saisir l'appareil à pleine main en enveloppant la manette 30 de ses quatre doigts. Si l'utilisateur n'actionne pas le bouton de sécurité 9, une pression sur la manette 30 ne permet pas le démarrage du moteur 2, puisque le coulisseau 6 est verrouillé en position de repos par le bouton de déverrouillage 8. On obtient ainsi un appareil ne pouvant pas démarrer par une simple pression involontaire sur la manette 30 et qui présente donc une grande sécurité de fonctionnement.

Pour démarrer le moteur 2, l'utilisateur doit impérativement appuyer sur le bouton de sécurité 9 simultanément à l'exercice d'une pression sur la manette 30 pour que l'action sur la manette 30 provoque le déplacement du coulisseau 6 et la mise sous tension du moteur 2. Une fois cette manoeuvre effectuée, l'utilisateur peut relâcher le bouton de sécurité 9 et maintenir à pleine main la manette 30 enfoncée pour que le moteur 2 continue de fonctionner. Ceci procure un grand confort d'utilisation puisque la pression sur la manette 30 est exercée sans crispation des doigts.

Un tel appareil présente également l'avantage de posséder une manette 30 qui est démontable du boitier 1, ce qui permet un nettoyage aisé de l'appareil, le démontage de la manette 30 s'effectuant en exerçant simplement une traction sur la bague 3 afin de l'extraire par l'extrémité inférieure du boitier 1.

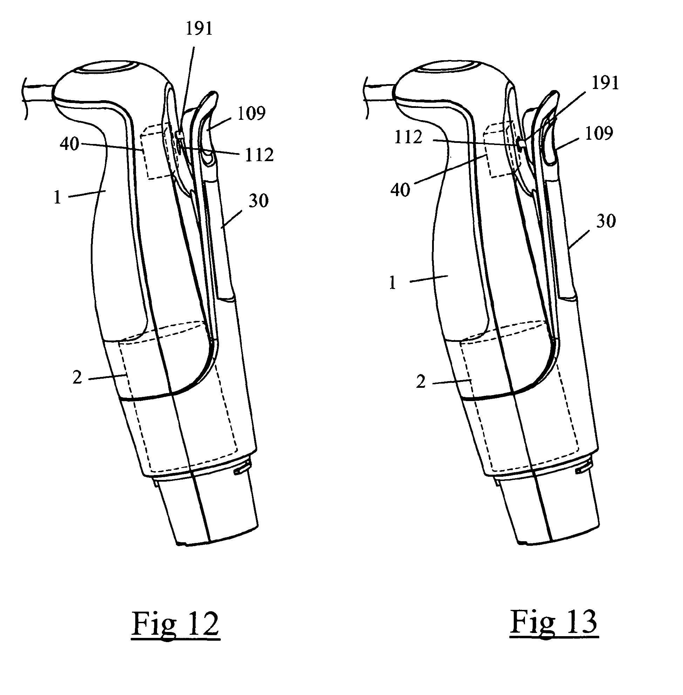

Les figures 12 et 13 illustrent un deuxième mode de réalisation de l'appareil électroménager selon l'invention dans lequel la manette 30 du boitier 1 est équipée d'un bouton de sécurité 109 mobile en translation longitudinalement à la manette 30 et est démunie du doigt d'actionnement 33.

Dans ce mode de réalisation, le bouton de sécurité 109 est ramené par un ressort, non illustré sur les figures, dans une position de repos dans laquelle une tige d'actionnement 191 solidaire du bouton de sécurité 109 se trouve décalée par rapport à un orifice 112, ainsi que cela est illustré sur la figure 12. Le boitier 1 renferme un interrupteur 40 disposé derrière l'orifice 112 de sorte que, lorsque le bouton de sécurité 109 est amené manuellement par translation longitudinale dans la position de fonctionnement illustrée à la figure 13 dans laquelle la tige d'actionnement 191 se trouve en regard de l'orifice 112, une pression manuelle sur la manette 30 provoque l'actionnement de l'interrupteur 40 par la tige d'actionnement 191 et la mise sous tension du moteur 2.

Lorsque la manette 30 est relâchée, l'interrupteur 40 n'est plus actionné ce qui provoque l'arrêt du moteur 2 et le bouton de sécurité 109 retourne en position de repos. On obtient ainsi un appareil présentant les mêmes avantages que ceux décrits pour le mode de réalisation précédent.

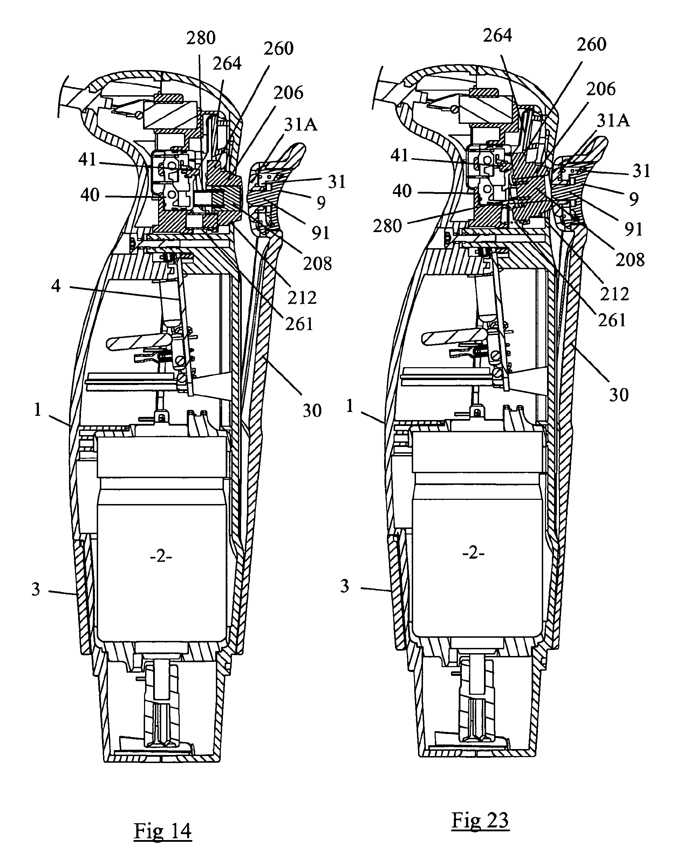

Les figures 14 à 25 illustrent un troisième mode de réalisation de l'invention dans lequel l'appareil comporte un boitier 1 semblable à celui du premier mode de réalisation, mais avec un mécanisme d'actionnement de l'interrupteur 40 différent, l'agencement du circuit imprimé 4 et de l'interrupteur 40 étant également légèrement modifié. De plus, la manette 30 comporte un bouton de sécurité 9 semblable à celui décrit dans le premier mode de réalisation mais est démunie de doigt d'actionnement.

Conformément à la figure 14, le bouton de sécurité 9 comporte une tige d'actionnement 91 traversant une paroi 31A du logement 31 recevant le bouton de sécurité 9, la tige d'actionnement 91 venant en regard d'un bouton de déverrouillage 208 porté par un module de commande intégré dans le boitier 1, le bouton de déverrouillage 208 s'étendant au centre d'un bouton de commande 206 faisant légèrement saillie au travers d'une ouverture 212 du boitier 1.

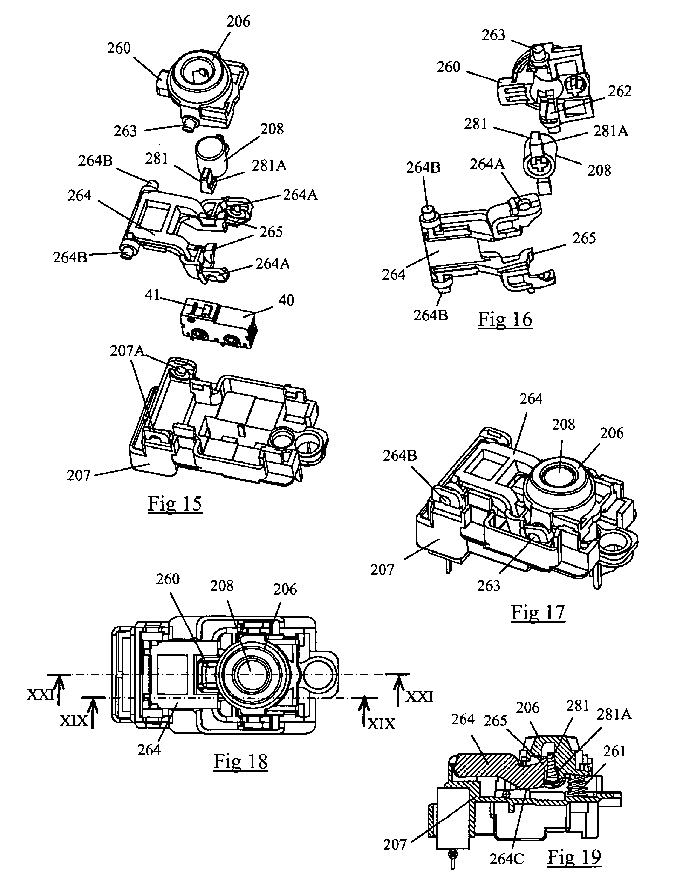

Conformément aux figures 15 à 17 représentant isolément le module de commande intégré dans le boitier 1, le bouton de commande 206 présente la forme d'une couronne annulaire comprenant une ouverture centrale recevant le bouton de déverrouillage 208, le bouton de commande 206 comportant un axe 263 lui assurant un montage pivotant dans des paliers 264A disposés à une extrémité d'un levier 264, le levier 264 étant lui-même monté pivotant à son extrémité opposée sur un bâti 207 au moyen d'un axe 264B engagé dans des paliers 207A.

Le bouton de commande 206 comprend une extension radiale s'étendant perpendiculairement à l'axe 263 qui forme un bras d'actionnement 260 destiné à venir presser sur le contacteur 41 de l'interrupteur 40 porté par le bâti 207 afin de commander la mise en marche du moteur 2, le bouton de commande 206 étant soumis à l'effort d'un ressort de rappel 261, visible sur la figure 14, disposé à l'opposé du bras d'actionnement 260 de sorte que le ressort de rappel 261 tend à faire basculer le bras d'actionnement 260 en direction du contacteur 41.

Le bouton de déverrouillage 208 présente un corps cylindrique pouvant coulisser à l'intérieur de l'ouverture centrale du bouton de commande 206, le bouton de déverrouillage étant ramené dans une position de verrouillage par un ressort de rappel 280, visible sur la figure 14, et comprenant deux loquets de verrouillage 281 venant s'engager dans des encoches 262 du bouton de commande 206 alignées avec l'axe 263.

De manière préférentielle, les loquets de verrouillage 281 comportent une surface latérale comprenant une butée 281A venant immobiliser le bouton de déverrouillage 208 dans la position de verrouillage (telle qu'illustrée aux figures 14 et 17) dans laquelle le sommet du bouton de déverrouillage 208 est très légèrement en retrait du bouton de commande 206.

Comme on peut le voir sur les figures 15 et 16, le levier 264 comporte deux doigts de blocage 265 venant le long de la surface latérale des loquets de verrouillage 281, du côté du bras d'actionnement 260, afin d'empêcher la rotation du bouton de commande 206 autour de son axe 263, dans le sens du basculement vers le contacteur 41, lorsque le bouton de déverrouillage 208 est en position de verrouillage, ainsi que cela est illustré sur la figure 19.

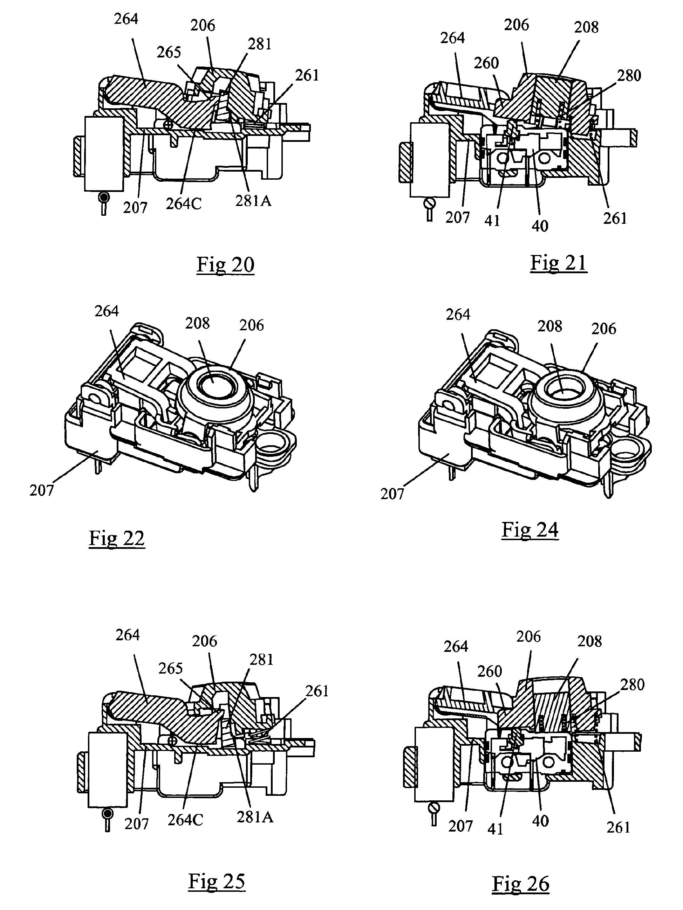

Les figures 20 à 22, illustrent la position des éléments du module de commande lorsque l'utilisateur presse sur la manette 30 sans appuyer sur le bouton de déverrouillage 208.

Dans une telle situation, la paroi 31A de la manette 30 vient prendre appui contre le bouton de commande 206 alors que le mouvement de pivotement du bouton de commande 206 autour de son axe 263 est bloqué par la présence des doigts de blocage 265. La pression exercée par la manette 30 sur le bouton de commande 206 provoque donc le pivotement du levier 264 autour de son axe 264B jusqu'à ce qu'une partie inférieure 264C du levier 264 vienne reposer contre le bâti 207, ainsi que cela est illustré sur la figure 20, le bouton de commande 206 accompagnant le mouvement de pivotement du levier 264, en étant solidaire en rotation de ce dernier, de sorte qu'il se trouve incliné par rapport à l'interrupteur 40 avec le ressort de rappel 261 comprimé à son maximum

Dans cette position du bouton de commande 206, le bras d'actionnement 260 du bouton de commande 206 se trouve au dessus du contacteur 41 de l'interrupteur sans toutefois appuyer sur ce dernier (ainsi que cela est illustré à la figure 21) et le moteur 2 reste donc à l'arrêt.

Si l'utilisateur décide de relâcher la manette 30, le bouton de commande 206 retourne alors dans sa position de repos illustrée sur la figure 19 sous l'effet des ressorts de rappel 261 et 280.

Par contre, si l'utilisateur appuie sur le bouton de sécurité 9 en conservant la manette 30 enfoncée, ceci provoque le déplacement du bouton de déverrouillage 208 à l'encontre de son ressort de rappel 280 (ainsi que cela est illustré sur les figures 23 à 26) de sorte que les loquets de verrouillage 281 du bouton de déverrouillage 208 s'échappent en dessous des doigts de blocage 265, ainsi que cela est illustré sur la figure 25. Le bouton de commande 206 tourne alors autour de son axe 263 sous l'effet du ressort de rappel 261 vers une position de fonctionnement du moteur 2, illustrée sur la figure 26, dans laquelle le bras d'actionnement 260 appuie sur le contacteur 41, la force exercée par le bras d'actionnement 260 sous l'effet du ressort de rappel 261 étant alors supérieure à l'effort nécessaire pour enfoncer le contacteur 41.

Bien entendu, l'utilisateur peut également choisir de mettre en marche le moteur 2 en appuyant sur le bouton de sécurité 9 préalablement et/ou simultanément à l'enfoncement de la manette 30 afin que le bouton de commande 206 soit libre de tourner autour de son axe 263, sous l'effet du ressort 261, lorsque la manette 30 exerce une pression sur le bouton de commande 206.

On obtient ainsi un dispositif de commande présentant une grande souplesse d'utilisation, la mise en marche du moteur 2 pouvant être obtenue soit en appuyant sur le bouton de sécurité 9 avant d'enfoncer la manette 30, soit enfonçant d'abord la manette 30 puis en appuyant sur le bouton de sécurité 9, soit par une action simultanée de la manette 30 et du bouton de sécurité 9.

Une fois le moteur 2 de l'appareil mis est en marche, l'utilisateur peut relâcher le bouton de sécurité 9 en conservant la manette 30 enfoncée sans que ceci ne provoque l'arrêt du moteur 2 étant donné que le bouton de commande 206 reste enfoncé direction du bâti 207, sous la pression exercée par la manette 30, en restant basculé dans la position de fonctionnement, le bouton de déverrouillage 208 restant par ailleurs immobilisé dans la position enfoncée par la présence des doigts de blocage 265 au dessus des loquets de verrouillage 281.

Lorsque l'utilisateur relâche la manette 30, le levier 264 et le bouton de commande 206 reviennent dans la position de repos illustrée à la figure 19, sous l'effet des ressorts de rappel 261 et 280, de sorte que le bouton de commande 206 pivote autour de son axe 263 par rapport au levier 264, ce qui permet au doigt de blocage 265 de s'échapper du dessus des loquets de verrouillage 281, le bouton de déverrouillage 208 revenant alors dans sa position de verrouillage.

Un tel mode de réalisation du module de commande présente l'avantage d'une grande robustesse, sans risque de détérioration du dispositif de commande lorsque l'utilisateur presse sur la manette sans avoir appuyé sur le bouton de sécurité.

Bien entendu, l'invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention.

Ainsi, dans une variante de réalisation non représentée, la manette et le bouton de sécurité pourront être associés à des contacteurs permettant d'identifier la position respective du bouton de sécurité et de la manette. Le dispositif de commande du moteur pourra alors être constitué par un circuit électrique ou électronique, disposé en lieu et place des systèmes mécaniques précédemment décrits, autorisant le fonctionnement continu du moteur par la seule pression sur la manette à condition que le bouton de sécurité ait été préalablement actionné en même temps que la manette.

Ainsi, dans une autre variante de réalisation de l'invention, le dispositif de commande pourra permettre le fonctionnement du moteur lorsque seul le bouton de sécurité est actionné.

Ainsi, dans une autre variante de réalisation de l'invention, le bouton de sécurité pourra être porté par le corps du boitier, par exemple à l'opposé de la manette.

## Revendications

1. Appareil électroménager de préparation culinaire prévu pour être tenu à la main comprenant un boitier (1) renfermant un moteur électrique (2) dont la mise sous tension est commandée par un dispositif de commande, **caractérisé en ce que** ledit dispositif de commande comporte une manette (30), pouvant être saisie par plusieurs doigts à la fois, ramenée par des moyens de rappel vers une position de repos et pouvant être actionnée manuellement vers une position de fonctionnement, et **en ce que** ledit dispositif de commande comporte un bouton de sécurité (9; 109) devant être actionné en même temps que la manette (30) afin que le seul maintien de la manette (30) en position de fonctionnement permette le fonctionnement continu du moteur (2) jusqu'au relâchement de ladite manette (30).

2. Appareil électroménager de préparation culinaire selon la revendication 1, **caractérisé en ce que** le moteur (2) est mis hors tension lorsque ni la manette (30), ni le bouton de sécurité (9; 109) ne sont actionnés.

3. Appareil électroménager de préparation culinaire selon l'une quelconque des revendications 1 à 2, **caractérisé en ce que** le moteur (2) est commandé par un organe de commande (6; 206) mobile entre une position de repos et une position de fonctionnement, l'organe de commande (6; 206) étant immobilisé dans la position de repos par des moyens de verrouillage (81; 265, 281) lorsque le bouton de sécurité (9) n'est pas actionné.

4. Appareil électroménager de préparation culinaire selon la revendication 3, **caractérisé en ce que** le bouton de sécurité (9) coopère avec un bouton de déverrouillage (8; 208) porté par le boitier (1) pour déplacer le bouton de déverrouillage (8; 208) vers une position de fonctionnement dans laquelle les moyens de verrouillage (81; 265, 281) sont désactivés, ledit bouton de déverrouillage (8; 208) étant ramené par un ressort (80; 280) dans une position de verrouillage dans laquelle l'organe de commande (6; 206) est immobilisé en position de repos par les moyens de verrouillage (81; 265, 281).

5. Appareil électroménager de préparation culinaire selon l'une quelconque des revendications 1 à 2, **caractérisé en ce que** le boitier (1) comporte des moyens de blocage interdisant le déplacement de la manette (30) vers la position de fonctionnement lorsque le bouton de sécurité (9; 109) n'est pas actionné, lesdits moyens de blocage s'activant automatiquement lorsque la manette (30) est en position repos.

6. Appareil électroménager de préparation culinaire selon la revendication 5, **caractérisé en ce que** lesdits moyens de blocage comportent un coulisseau (6) mobile en translation derrière une ouverture (12, 13) du boitier, ledit coulisseau (6) étant ramené par des moyens de rappel (61) dans une position de repos dans laquelle le coulisseau (6) est bloqué en translation par un loquet de verrouillage (81) s'engageant dans une empreinte (62), ledit bouton de sécurité (9) comportant une tige d'actionnement (91) venant chasser le loquet de verrouillage (81) hors de l'empreinte (62) lorsque le bouton de sécurité (9) est actionné et **en ce que** ledit coulisseau (6) comporte une rampe (64) qui coopère avec un doigt d'actionnement (33) porté par la manette (30) de manière à ce que l'enfoncement de la manette (30) vers la position de fonctionnement génère une force tendant à déplacer en translation le coulisseau (6) vers une position de fonctionnement dans laquelle une came (60) portée par le coulisseau vient actionner un interrupteur (40) de commande du moteur (2).

7. Appareil électroménager de préparation culinaire selon l'une quelconque des revendications 3 à 4, **caractérisé en ce que** l'organe de commande (206) est monté pivotant sur un levier (264) de manière à pouvoir basculer de la position de repos à la position de fonctionnement, ledit levier (264) étant lui-même monté pivotant sur un bâti (207).

8. Appareil électroménager de préparation culinaire selon l'une quelconque des revendications 1 à 7, **caractérisé en ce que** ladite manette (30) s'étend longitudinalement sur sensiblement toute la longueur du boitier (1).

9. Appareil électroménager de préparation culinaire selon l'une quelconque des revendications 1 à 8, **caractérisé en ce que** ladite manette (30) comporte une extrémité fixée sur le boitier (1) et une extrémité libre.

10. Appareil électroménager de préparation culinaire selon la revendication 9, **caractérisé en ce que** la manette (30) est fixée rigidement au boitier à l'une de ses extrémités et est flexible de manière à permettre le déplacement de l'extrémité libre de la manette (30) de la position de repos à la position de fonctionnement par déformation de ladite manette (30), lesdits moyens de rappel de la manette en position de repos étant constitués par l'élasticité de la manette (30).

11. Appareil électroménager de préparation culinaire selon l'une quelconque des revendications 1 à 10, **caractérisé en ce que** la manette (30) est fixée de manière amovible sur le boitier (1) de sorte qu'elle peut être facilement démontée du boitier (1) sans avoir recours à un outillage particulier.

12. Appareil électroménager de préparation culinaire selon l'une quelconque des revendications 1 à 11, **caractérisé en ce que** ledit bouton de sécurité (9, 109) est porté par ladite manette (30).

13. Appareil électroménager de préparation culinaire selon la revendication 12, **caractérisé en ce que** le bouton de sécurité (9, 109) est disposé à proximité de l'extrémité libre de la manette (30).

14. Appareil électroménager de préparation culinaire selon l'une quelconque des revendications 1 à 13, **caractérisé en ce que** ledit bouton de sécurité (9, 109) est tel qu'il ne puisse pas être actionné par une sphère de diamètre 40 mm.

15. Appareil électroménager de préparation culinaire selon l'une quelconque des revendications 1 à 14, **caractérisé en ce que** ledit boitier (1) comporte une extrémité pouvant être accouplée avec un pied de mixage (100).

## Claims

1. A household electrical appliance for preparing food designed to be hand-held comprising a housing (1) containing an electric motor (2) whose power-up is controlled by a control device, **characterised in that** said control device has a hand lever (30) which may be held by many fingers at the same time, brought back by return means to a rest position and which may be manually moved to an operating position, and **in that** said control device includes a safety button (9; 109) that must be operated at the same time as the hand lever (30) so that merely maintaining the hand lever (30) in operating position allows the continuous operation of the motor (2) until said hand lever (30) is released.

2. A household electrical appliance for preparing food according to claim 1, **characterised in that** the motor (2) is powered off when neither the hand lever (30) nor the safety button (9; 109) is operated.

3. A household electrical appliance for preparing food according to any one of claims 1 to 2, **characterised in that** the motor (2) is controlled by a control unit (6; 206) that moves between a rest position and an operating position, the control unit (6; 206) being immobilised in rest position by locking means (81; 265, 281) when the safety button (9) is not operated.

4. A household electrical appliance for preparing food according to claim 3, **characterised in that** the safety button (9) cooperates with an unlocking button (8; 208) carried by the housing (1) to move the unlocking button (8; 208) to an operating position in which the locking means (81; 265, 281) is deactivated, said unlocking button (8; 208) being brought back by a spring (80; 280) to a locked position in which the control unit (6; 206) is immobilised in rest position by the locking means (81; 265, 281).

5. A household electrical appliance for preparing food according to any one of claims 1 to 2, **characterised in that** the housing (1) contains blocking means prohibiting the displacement of the hand lever (30) to the operating position when the safety button (9; 109) is not operated, said blocking means being activated automatically when the hand lever (30) is in rest position.

6. A household electrical appliance for preparing food according to claim 5, **characterised in that** said blocking means includes a slide (6) which moves in translation behind an opening (12, 13) of the housing, said slide (6) being brought back by return means (61) to a rest position in which the slide (6) is blocked in translation by a locking latch (81) engaged in a recess (62), said safety button (9) including an actuating rod (91) that drives the locking latch (81) out of the recess (62) when the safety button (9) is operated and **in that** said slide (6) includes a ramp (64) cooperating with an actuating finger (33) carried by the hand lever (30) such that the depression of the hand lever (30) to operating position generates a force that moves the slide (6) in translation towards an operating position in which a cam (60) carried by the slide actuates a switch (40) that controls the motor (2).

7. A household electrical appliance for preparing food according to any one of claims 3 to 4, **characterised in that** the control unit (206) is pivotally mounted on a lever (264) so as to be able to switch from rest position to operating position, said lever (264) being itself pivotally mounted on a frame (207).

8. A household electrical appliance for preparing food according to any one of claims 1 to 7, **characterised in that** said hand lever (30) extends longitudinally over substantially the entire length of the housing (1).

9. A household electrical appliance for preparing food according to any one of claims 1 to 8, **characterised in that** said hand lever (30) includes a fixed end on the housing (1) and a free end.

10. A household electrical appliance for preparing food according to claim 9, **characterised in that** the hand lever (30) is rigidly fixed to the housing at one of the ends thereof and is flexible so as to allow the displacement of the free end of the hand lever (30) from rest position to operating position by deformation of said hand lever (30), said means for returning the hand lever to rest position being formed by the elasticity of the hand lever (30).

11. A household electrical appliance for preparing food according to any one of claims 1 to 10, **characterised in that** the hand lever (30) is removably fixed to the housing (1) such that it can be easily dismantled from the housing (1) without requiring any special tool.

12. A household electrical appliance for preparing food according to any one of claims 1 to 11, **characterised in that** said safety button (9, 109) is carried by said hand lever (30).

13. A household electrical appliance for preparing food according to claim 12, **characterised in that** the safety button (9,109) is arranged close to the free end of the hand lever (30).

14. A household electrical appliance for preparing food according to any one of claims 1 to 13, **characterised in that** said safety button (9, 109) is such that it cannot be operated by a sphere of 40 mm diameter.

15. A household electrical appliance for preparing food according to any one of claims 1 to 14, **characterised in that** said housing (1) includes an end that may be coupled with a blender foot (100).

## Patentansprüche

1. Elektrohaushaltsgerät für kulinarische Zubereitungen, das dafür vorgesehen ist, in der Hand gehalten zu werden, umfassend ein Gehäuse (1), das einen Elektromotor (2) einschließt, dessen Einschaltung mittels einer Steuervorrichtung gesteuert wird, **dadurch gekennzeichnet, dass** die Steuervorrichtung einen Bedienungshebel (30) umfasst, der von mehreren Fingern gleichzeitig erfasst, von Rückstellmitteln in eine Ruheposition zurückgesetzt und manuell in eine Betriebsposition gestellt werden kann, und dadurch, dass die Steuervorrichtung eine Sicherheitstaste (9; 109) umfasst, die gleichzeitig mit dem Bedienungshebel (30) betätigt werden muss, damit ausschließlich das Halten des Bedienungshebels (30) in Betriebsposition den durchgehenden Betrieb des Motors (2) bis zum Lösen des Bedienungshebels (30) ermöglicht.

2. Elektrohaushaltsgerät für kulinarische Zubereitungen nach Anspruch 1, **dadurch gekennzeichnet, dass** der Motor (2) ausgeschaltet ist, wenn weder der Bedienungshebel (30) noch die Sicherheitstaste (9; 109) betätigt werden.

3. Elektrohaushaltsgerät für kulinarische Zubereitungen nach einem der Ansprüche 1 bis 2, **dadurch gekennzeichnet, dass** der Motor (2) von einem Steuerelement (6; 206) gesteuert wird, das zwischen einer Ruheposition und einer Betriebsposition beweglich ist, wobei das Steuerelement (6; 206) von Verriegelungsmitteln (81; 265, 281) in der Ruheposition arretiert wird, wenn die Sicherheitstaste (9) nicht betätigt wird.

4. Elektrohaushaltsgerät für kulinarische Zubereitungen nach Anspruch 3, **dadurch gekennzeichnet, dass** die Sicherheitstaste (9) mit einer Entriegelungstaste (8; 208) zusammenwirkt, die vom Gehäuse (1) getragen wird, um die Entriegelungstaste (8; 208) in eine Betriebsposition zu versetzen, in der die Verriegelungsmittel (81; 265, 281) deaktiviert sind, wobei die Entriegelungstaste (8; 208) von einer Feder (80; 280) in eine Verriegelungsposition zurückgestellt wird, in der das Steuerelement (6; 206) von den Verriegelungsmitteln (81; 265, 281) in Ruheposition arretiert wird.

5. Elektrohaushaltsgerät für kulinarische Zubereitungen nach einem der Ansprüche 1 bis 2, **dadurch gekennzeichnet, dass** das Gehäuse (1) Sperrmittel umfasst, die die Bewegung des Bedienungshebels (30) in die Betriebsposition verhindern, wenn die Sicherheitstaste (9; 109) nicht betätigt wird, wobei die Sperrmittel automatisch aktiviert werden, wenn sich der Bedienungshebel (30) in Ruheposition befindet.

6. Elektrohaushaltsgerät für kulinarische Zubereitungen nach Anspruch 5, **dadurch gekennzeichnet, dass** die Sperrmittel einen Schieber (6) umfassen, der hinter einer Öffnung (12, 13) des Gehäuses verschiebbar ist, wobei der Schieber (6) von Rückstellmitteln (61) in eine Ruheposition zurückgestellt wird, in der der Schieber (6) von einem Verriegelungsschnapper (81), der in eine Vertiefung (62) eingreift, verschubfest arretiert wird, wobei die Sicherheitstaste (9) einen Betätigungszapfen (91) umfasst, der den Verriegelungsschnapper (81) aus der Vertiefung (62) hinaustreibt, wenn die Sicherheitstaste (9) betätigt wird, und dadurch, dass der Schieber (6) eine Rampe (64) umfasst, die mit einem Betätigungsstift (33) zusammenwirkt, der vom Bedienungshebel (30) getragen wird, so dass das Hineindrücken des Bedienungshebels (30) in die Betriebsposition eine Spannkraft erzeugt, die den Schieber (6) in eine Betriebsposition gleiten lässt, in der ein Steuerbolzen (60), der vom Schieber getragen wird, einen Schalter (40) zur Steuerung des Motors (2) betätigt.

7. Elektrohaushaltsgerät für kulinarische Zubereitungen nach einem der Ansprüche 3 bis 4, **dadurch gekennzeichnet, dass** das Steuerelement (206) schwenkbar auf einem Hebel (264) befestigt ist, so dass es von der Ruheposition in die Betriebsposition kippen kann, wobei der Hebel (264) selbst schwenkbar auf einem Gestell (207) befestigt ist.

8. Elektrohaushaltsgerät für kulinarische Zubereitungen nach einem der Ansprüche 1 bis 7, **dadurch gekennzeichnet, dass** sich der Bedienungshebel (30) im Wesentlichen längs über die gesamte Länge des Gehäuses (1) erstreckt.

9. Elektrohaushaltsgerät für kulinarische Zubereitungen nach einem der Ansprüche 1 bis 8, **dadurch gekennzeichnet, dass** der Bedienungshebel (30) ein Ende, das am Gehäuse (1) befestigt ist, und ein freies Ende umfasst.

10. Elektrohaushaltsgerät für kulinarische Zubereitungen Anspruch 9, **dadurch gekennzeichnet, dass** der Bedienungshebel (30) an einem seiner Enden starr am Gehäuse befestigt und biegsam ist, so dass er die Bewegung des freien Endes des Bedienungshebels (30) von der Ruheposition in die Betriebsposition durch Verformung des Bedienungshebels (30) ermöglicht, wobei die Mittel zum Zurückstellen des Bedienungshebels in Ruheposition von der Elastizität des Bedienungshebels (30) gebildet werden.

11. Elektrohaushaltsgerät für kulinarische Zubereitungen nach einem der Ansprüche 1 bis 10, **dadurch gekennzeichnet, dass** der Bedienungshebel (30) abnehmbar am Gehäuse (1) befestigt ist, so dass er leicht vom Gehäuse (1) abzunehmen ist, ohne dafür ein Spezialwerkzeug zu benötigen.

12. Elektrohaushaltsgerät für kulinarische Zubereitungen nach einem der Ansprüche 1 bis 11, **dadurch gekennzeichnet, dass** die Sicherheitstaste (9, 109) vom Bedienungshebel (30) getragen wird.

13. Elektrohaushaltsgerät für kulinarische Zubereitungen nach Anspruch 12, **dadurch gekennzeichnet, dass** die Sicherheitstaste (9, 109) in der Nähe des freien Endes des Bedienungshebels (30) angeordnet ist.

14. Elektrohaushaltsgerät für kulinarische Zubereitungen nach einem der Ansprüche 1 bis 13, **dadurch gekennzeichnet, dass** die Sicherheitstaste (9, 109) eine solche ist, dass sie nicht von einer Kugel mit 40 mm Durchmesser betätigt werden kann.

15. Elektrohaushaltsgerät für kulinarische Zubereitungen nach einem der Ansprüche 1 bis 14, **dadurch gekennzeichnet, dass** das Gehäuse (1) ein Ende umfasst, das mit einem Mixstab (100) verkoppelt werden kann.
